# EUROPÄISCHE PATENTSCHRIFT

(11) **EP 1 354 909 B1**
(45) Veröffentlichungstag und Bekanntmachung des Hinweises auf die Patenterteilung: **07.12.2005**
(21) Anmeldenummer: 03006449.7
(22) Anmeldetag: 21.03.2003
(51) Int. Cl.: C08J 3/12, B29B 9/00, C09D 5/03, B01J 2/02, B01J 2/04, C08J 3/20, C09D 163/00, C09D 167/00, C08J 3/24, C08G 59/18

(54) **Verfahren zur Herstellung von Pulverlack**
Process for preparing a powder paint
Procédé pour préparer une peinture en poudre

(30) Priorität: 21.03.2002 DE 10212482
(43) Veröffentlichungstag der Anmeldung: 22.10.2003
(73) Patentinhaber: Air Liquide Deutschland GmbH, 40235 Düsseldorf (DE)
(72) Erfinder: Dietrich, Oliver, 40221 Düsseldorf (DE); Jost, Gerhard, 47918 Tönisvorst (DE); Kobuss, Rüdiger, 47929 Grefrath (DE)
(74) Vertreter: Kahlhöfer, Hermann

(56) Entgegenhaltungen:
- EP-A- 0 661 091
- WO-A-94/26808

## Beschreibung

Die Erfindung betrifft ein Verfahren zur Herstellung von Pulverlack, nach den Merkmalen des Oberbegriffs von Anspruch 1.

Zur Herstellung von Pulverlack werden die zur Lackherstellung benötigten Grundstoffe gemischt, extrudiert, gekühlt und zu einem fein-, grob- und spritzkörnige Bestandteile enthaltenden pulverförmigen Lack zermahlen.

Zur Herstellung eines feinkörnigen Pulverlacks müssen die grob- und spritzkörnigen Bestandteile aus dem pulvrigen Mahlgut entfernt werden .

Dieses erfolgt in der Regel durch Sieben des pulvrigen Mahlguts in einer Siebmaschine, beispielsweise in einer Wirbelzylinder-Siebmaschine.

Der aus der Siebmaschine als Feingut abgezogene Pulverlack wird verpackt und seiner bestimmungsgemäßen Verwendung zugeführt.

Der aus dem Mahlgut ausgesiebte grobkörnige Anteil wird einem zusätzlichen Mahlprozess unterworfen.

Dieses bekannte Verfahren zur Herstellung von Pulverlack weist den wesentlichen Nachteil auf, dass - z.B. bei hohen Prozess- und Umgebungstemperaturen bzw. bei großen Korndurchmessern - die bei der herkömmlichen Pulverlack-Herstellung zur Verfügung stehende Kühlleistung nicht mehr ausreicht, um einen Pulverlack in einer einwandfreien Feingut-Qualität zu erzeugen.

Ein nicht ausreichend gekühlter Pulverlack kann eine Restfeuchtigkeit aufweisen, die zu einem Verklumpen des in Säcke verpackten Produktes führen kann.

Diese während des Herstellung von Pulverlack durch eine ungenügende Produktkühlung hervorgerufene Qualitätsminderung des Fertigprodukts kann nicht oder nur mit einem zusätzlichen Kostenaufwand beseitigt werden.

Der Erfindung liegt daher die Aufgabenstellung zugrunde, ein Verfahren der eingangs beschriebenen Art zur Verfügung zu stellen, mittels welchem ein pulvriges Produkt in Form von Pulverlack einfach und kostengünstig in einer einwandfreien Produktqualität hergestellt werden kann.

Die Aufgabe wird erfindungsgemäß durch ein Verfahren mit den Merkmalen von Anspruch 1 gelöst.

Vorteilhafte Ausgestaltungen des Erfindungsgegenstand sind den Unteransprüchen zu entnehmen.

Die erfindungsgemäße Kühlung von pulvrigem Mahlgut (Pulverlack) während des Siebprozesses mit Flüssiggas, besonders vorteilhaft mit kostengünstigem flüssigen Stickstoff, ermöglicht eine einfache und kostengünstige Herstellung von pulvrigen Produkten, wie Pulverlack, in einer einwandfreien Produktqualität.

Zur Kühlung des zu siebenden, pulvrigen Mahlguts (Pulverlack) wird ein Flüssigstickstoff mit einer Temperatur von mindestens -196°C und einen Stickstoffanteil von mindestens 99,99 Vol.-% unter einen Druck von 4 bis 5 bar durch einen in jeder herkömmlichen Siebmaschine bereits vorhandenen, als Eintragsdüse genutzten Sinterkörper eingedüst.

Der erfindungsgemäße Kühlmitteleintrag in das Mahlgut ermöglicht eine den jeweils herrschenden Prozess- und Umgebungsbedingungen problemlos anpassbare und eine einwandfreie Produktqualität gewährleistende Temperaturführung.

Der durch die erfindungsgemäße Kühlung mit Flüssigstickstoff in der Siebmaschine auf eine Temperatur von 0°C bis 20°C gekühlte aus dem Austragsbereich der Siebmaschine als Feingut mit einer maximalen Korngröße von 150 µm abziehbare Pulverlack weist keine innere Restfeuchtigkeit im Partikelkern auf, so dass ein Verklumpen des in Säcken abgepackten Pulverlacks ausgeschlossen werden kann.

Der zur Kühlung des pulvrigen Mahlguts (Pulverlack) während des Siebprozesses eingesetzte Flüssigstickstoff (LIN) wird sicher, einfach und kostengünstig über einen in der Siebmaschine installierten Sinterkörper, eine angeschlossene und mit gebräuchlicher Regeltechnik ausgerüsteten Leitung durch den als Eintragsdüse genutzten Sinterkörper in das pulverförmige Mahlgut (Pulverlack) eingebracht.

Die Menge des zum Kühlen des Siebgutes in die Siebmaschine eingetragenen Flüssigstickstoffs wird mittels einer handelsüblichen Regeleinrichtung, beispielsweise einem Stetigregler "DICON 500" der Fa. M. K. Juchheim GmbH + Co, über die Temperatur des als Feingut in dem Austragsbereich der Siebmaschine vorliegenden Pulverlacks auf bekannte Weise geregelt.

Es wurde ermittelt, dass eine Menge von 0,05 bis 0,2 kg pro kg Mahlgut in die Siebmaschine eingetragener Flüssigstickstoff gewährleistet, dass der als Feingut im Austragsbereich der Siebmaschine vorliegende Pulverlack eine Temperatur von 0°C bis 20°C aufweist.

Ein mit maximal 20°C in Form von Feingut abgesackter Pulverlack weist eine Restfeuchtigkeit im Partikelkern auf, die ein Verklumpen des abgesackten Produkts ausschließt.

Die Kühlung von pulvrigem Mahlgut (Pulverlack) mit Flüssigstickstoff in Siebmaschinen, insbesondere in Zylindersiebmaschinen, ermöglicht eine kostengünstige, den jeweils vorhandenen Prozess- und/oder Umweltbedingungen schnell und problemlos anpassbare, homogene Kühlung von Mahlgut ohne hohen apparativen Kostenaufwand.

Die Arbeitssicherheit des Bedienungspersonals von Siebmaschinen wird durch den erfindungsgemäßen Flüssigstickstoff-Eintrag in die Siebmaschine nicht beeinträchtigt, da aus deren hermetisch abgedichteten Arbeitsraum kein Stickstoff oder ein sonstiges gesundheitsgefährdendes Produkt, wie z.B. Staub, austreten kann.

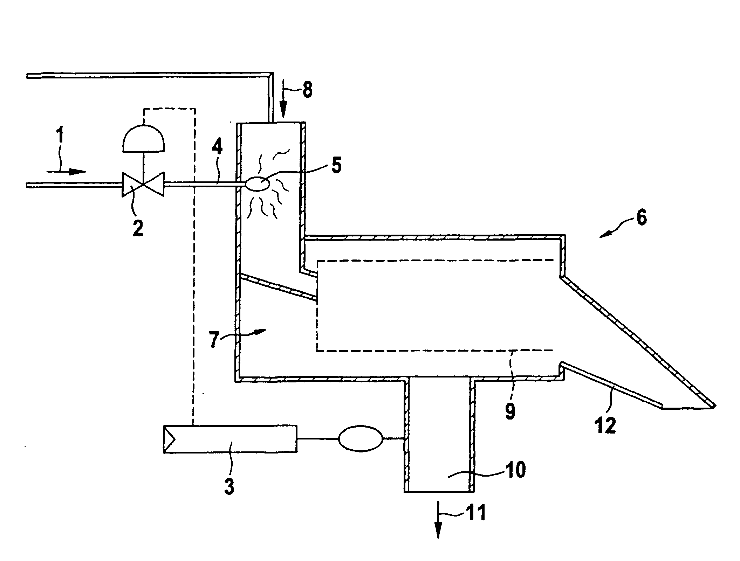

Nachfolgend wird die Erfindung anhand eines in der Zeichnung dargestellten Ausführungsbeispiels näher erläutert.

Dem als einzige Figur der Zeichnung dargestellten Verfahrensschema einer erfindungsgemäßen Kühlung eines pulvrigen Mahlguts mit Flüssigstickstoff während des Siebprozesses ist zu entnehmen, das -196°C kalter Flüssigstickstoff 1 unter einen Druck von 4 bis 5 bar über eine ein Regelventil 2 mit einem Stetigregler 3 aufweisende, wärmeisolierte Leitung 4 durch einen in einer Zylindersiebmaschine 6 als Eintragsdüse genutzten Sinterkörper 5 in ein mit einer Temperatur von 30 bis 50°C in einen Innenraum 7 der Zylindersiebmaschine 6 eingebrachtes, pulvriges Mahlgut 8 eingedüst wird.

Das auf vorbeschriebene Weise mit flüssigem Stickstoff 1 beaufschlagte pulvrige Mahlgut 8 wird in einem in dem Innenraum 7 der Siebmaschine 6 angeordneten Siebeinsatz 9 bei einem Überdruck von 1 bis 3 cm Wassersäule verwirbelt.

Dabei werden die feinkörnigen Bestandteile des Mahlguts 8 durch die Öffnungen des Siebeinsatzes 9 über einen bodenseitigen Austrag 10 als eine Temperatur von 0 bis 20°C aufweisendes Feingut 11 aus der Siebmaschine 6 ausgetragen.

Die in dem Einbausieb 9 verbleibenden grob- und spritzkörnigen Bestandteile des pulvrigen Mahlguts 8 werden durch eine stirnseitige Öffnung des Siebeinsatzes 9 über einen stirnseitigen Austrag 12 aus der Siebmaschine 6 abgezogen und einem Mahlprozess zugeführt.

Die zur Kühlung des in die Siebmaschine 6 von seinen grob- und spritzkörnigen Bestandteilen zu reinigenden Mahlguts 8 erforderliche Menge an Flüssigstickstoff 1 von 0,05 bis 0,2 kg pro kg zu kühlendes Mahlgut 8 wird mittels des als Stetigreglers, beispielsweise vom Typ " DICON 500" der Fa. M. K. Juchheim GmbH + Co, ausgebildeten, die Temperatur des in dem Austrag 10 der Siebmaschine 6 befindlichen Feinguts 11 erfassenden Reglers 3, auf bekannte Weise geregelt.

Als Flüssigstickstoff 1 findet ein Produkt mit mindestens 99,99 Vol.% Stickstoffanteil Verwendung.

## Patentansprüche

1. Verfahren zur Herstellung von Pulverlack, bei dem ein pulvriges Mahlgut (8) zur Entfernung seiner grob- und spitzkörnigen Bestandteile gesiebt wird, **dadurch gekennzeichnet, daß** das Mahlgut (8) während des Siebprozesses mit Flüssiggas gekühlt wird.

2. Verfahren nach Anspruch 1, **dadurch gekennzeichnet, daß** als Kühlmittel flüssiger Stickstoff (1) eingesetzt wird.

3. Verfahren nach Anspruch 1 oder 2, **dadurch gekennzeichnet, daß** der flüssige Stickstoff (1) durch einen in einer Siebmaschine (6) als Eintragsdüse genutzten Sinterkörper (5) in das Mahlgut (8) eingedüst wird.

4. Verfahren nach einem der Ansprüche 1 bis 3, **dadurch gekennzeichnet, daß** die in das Mahlgut (8) einzutragende Menge an flüssigem Stickstoff (1) in Abhängigkeit von der Temperatur des in der Siebmaschine (6) zu Feingut (11) verarbeiteten Mahlguts (8) geregelt (3) wird.

5. Verfahren nach einem der Ansprüche 1 bis 4, **dadurch gekennzeichnet, daß** bis zu 0,2 Kilogramm flüssiger Stickstoff (1) in jedes Kilogramm Mahlgut (8) eingetragen werden.

6. Verfahren nach einem der Ansprüche 1 bis 5, **dadurch gekennzeichnet, daß** der flüssige Stickstoff (1) mit einer Temperatur von bis -196°C in das Mahlgut (8) eingedüst wird.

7. Verfahren nach einem der Ansprüche 1 bis 6, **dadurch gekennzeichnet, daß** der flüssige Stickstoff (1) mit einem Druck von 4 bis 5 bar in das Mahlgut (8) eingebracht wird.

8. Verfahren nach einem der Ansprüche 1 bis 7, **dadurch gekennzeichnet, daß** als Kühlmittel ein Flüssigstickstoff (1) mit mindestens 99,99 Vol.-% Stickstoffanteil eingesetzt wird.

## Claims

1. Method of producing powder coating material, where a powderous grinding stock (8) is sieved in order to remove its coarse and angular constituents, **characterized in that** during the sieving operation the grinding stock (8) is cooled with liquid gas.

2. Method according to Claim 1, **characterized in that** liquid nitrogen (1) is used as coolant.

3. Method according to Claim 1 or 2, **characterized in that** the liquid nitrogen (1) is introduced into the grinding stock (8) through a sintered structure (5) used as introduction nozzle in a sieving machine (6).

4. Method according to any one of Claims 1 to 3, **characterized in that** the amount of liquid nitrogen (1) to be introduced into the grinding stock (8) is regulated (3) as a function of the temperature of the grinding stock (8) processed to fine material (11) in the sieving machine (6).

5. Method according to any one of Claims 1 to 4, **characterized in that** up to 0.2 kilogram of liquid nitrogen (1) is introduced into each kilogram of grinding stock (8).

6. Method according to any one of Claims 1 to 5, **characterized in that** the liquid nitrogen (1) is introduced with a temperature of down to -196°C into the grinding stock (8).

7. Method according to any one of Claims 1 to 6, **characterized in that** the liquid nitrogen (1) is introduced with a pressure of 4 to 5 bar into the grinding stock (8).

8. Method according to any one of Claims 1 to 7, **characterized in that** a liquid nitrogen (1) having a nitrogen fraction of at least 99.9% by volume is used as coolant.

## Revendications

1. Procédé en vue de la fabrication de laque en poudre, lors duquel un produit de mouture pulvérulent (8) est tamisé en vue de l'élimination de ses constituants à grains grossiers et pointus, **caractérisé en ce que** le produit de mouture (8) est refroidi lors du processus de tamisage à l'aide d'un gaz fluide.

2. Procédé selon la revendication 1, **caractérisé en ce que** l'on utilise, en tant que réfrigérant, de l'azote liquide (1).

3. Procédé selon la revendication 1 ou 2, **caractérisé en ce que** l'azote liquide (1) est injecté dans le produit de mouture (8) à travers un corps de frittage (5) utilisé dans un appareil à tamiser (6) en tant que buse d'admission.

4. Procédé selon l'une quelconque des revendications 1 à 3, **caractérisé en ce que** la quantité d'azote liquide (1) à admettre dans le produit de mouture (8) est réglée (3) en fonction de la température du produit de mouture (8) traité dans l'appareil à tamiser (6) pour former le produit fin (11).

5. Procédé selon l'une quelconque des revendications 1 à 4, **caractérisé en ce que** l'on admet jusqu'à 0,2 kilogramme d'azote liquide (1) dans chaque kilogramme de produit de mouture (8).

6. Procédé selon l'une quelconque des revendications 1 à 5, **caractérisé en ce que** l'azote liquide (1) est injecté dans le produit de mouture (8) à une température allant jusqu'à -196°C.

7. Procédé selon l'une quelconque des revendications 1 à 6, **caractérisé en ce que** l'azote liquide (1) est admis dans le produit de mouture (8) à une pression de 4 à 5 bars.

8. Procédé selon l'une quelconque des revendications 1 à 7, **caractérisé en ce que** l'on utilise en tant que réfrigérant un azote liquide (1), ayant au moins une proportion d'azote de 99,99% en volume.
